# EUROPEAN PATENT SPECIFICATION

(11) **EP 3 528 306 B1**
(45) Date of publication and mention of the grant of the patent: **14.10.2026**
(21) Application number: 18839003.3
(22) Date of filing: 05.07.2018
(51) Int. Cl.: H01M 10/48

(54) **BATTERY MODULE, AND BATTERY PACK AND ENERGY STORAGE SYSTEM INCLUDING THE SAME**
BATTERIEMODUL, BATTERIEPACK DAMIT UND ENERGIESPEICHERVORRICHTUNG
MODULE DE BATTERIES, BLOC-BATTERIE LE COMPRENANT ET DISPOSITIF ACCUMULATEUR DE PUISSANCE

(30) Priority: 28.07.2017 KR 20170096343
(43) Date of publication of application: 21.08.2019
(60) Divisional application: 25219187.9 / 4 712 207; 26200015.1
(73) Proprietor: LG Energy Solution, Ltd., Seoul 07335 (KR)
(72) Inventor: LEE, Bum-Hyun, Daejeon 34122 (KR); SHIN, Jin-Kyu, Daejeon 34122 (KR)
(74) Representative: Plasseraud IP
(86) International application number: PCT/KR2018/007648
(87) International publication number: WO 2019/022407

(56) References cited:
- EP-A1- 3 002 804
- EP-A1- 3 076 456
- EP-A1- 3 151 332
- EP-A2- 2 328 205
- EP-A2- 2 672 284
- JP-A- 2016 076 451
- JP-A- 2016 076 451
- KR-A- 20140 084 563
- KR-A- 20170 034 560
- KR-A- 20170 034 560
- KR-A- 20170 050 510
- KR-B1- 101 542 072

## Description

### TECHNICAL FIELD

The present disclosure relates to a battery module, and a battery pack and an energy storage system including the battery module.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing environment friendliness and energy efficiency in that the use of fossil fuels can be reduced greatly and no byproduct is generated during energy consumption.

Secondary batteries widely used at the preset include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.6V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module composed of at least one battery cell first, and then configure a battery pack by using at least one battery module and adding other components. Here, the battery cells configuring the battery module or the battery pack are generally pouch-type secondary batteries that may be easily stacked on one another.

A conventional battery module generally includes a sensing assembly for connecting the electrode leads of the plurality of stacked battery cells and sensing the voltage of the battery cells. The sensing assembly is generally constructed as a single housing structure to cover protruding portions of the electrode leads of the battery cells.

However, since the conventional sensing assembly has a single housing structure, when the total size of the battery cells is changed by increasing or decreasing the number of stacked battery cells due to the change of capacity of the battery module or the battery pack, a housing suitable for the changed size should be designed again.

Further background art is described in EP 3002804 A1, EP 2328205 A2, KR 2017-0034560 A, EP 3151332 A1, EP 3076456 A1 and JP 2016 076451 A.

### DISCLOSURE

### Technical Problem

The present disclosure is directed to providing a battery module, which includes a sensing assembly with convenient and easy expandability, and a battery pack and an energy storage system including the battery module.

### Technical Solution

In one aspect of the present disclosure, there is provided a battery module, comprising: a plurality of battery cells stacked on one another and having electrode leads protruding therefrom; and at least one sensing assembly mounted to at least one side of the plurality of battery cells and configured to electrically connect the electrode leads, wherein the at least one sensing assembly includes: a sensing bus bar electrically connected to the electrode leads; and a plurality of sensing housing parts configured so that the sensing bus bar is mounted to a front surface thereof, the plurality of sensing housing parts allowing the electrode leads to pass therethrough toward the sensing bus bar, the plurality of sensing housing parts being detachably assembled with each other.

The plurality of sensing housing parts are provided in a number corresponding to the number of the battery cells.

The plurality of sensing housing parts are assembled by being fitted into each other in a block-to-block coupling pattern.

The plurality of sensing housing parts respective have a convex protrusion and a concave groove corresponding to each other.

The convex protrusion and the concave groove may have at least one of a circular shape, a rectangular shape, a trapezoidal shape and an oval shape.

At least one anti-movement rib may be formed at a rear surface of the plurality of sensing housing parts to prevent the battery cells from moving.

The sensing assembly may include a temperature sensor provided between the plurality of sensing housing parts and the sensing bus bar.

When being assembled with each other, the plurality of sensing housing parts may form a sensor mounting groove at which the temperature sensor is mounted.

In addition, present disclosure provides a battery pack comprising: at least one battery module according to the above embodiment; and a pack case configured to package the at least one battery module.

Moreover, the present disclosure provides an energy storage system comprising at least one battery pack according to the former embodiments.

### Advantageous Effects

According to various embodiments as above, it is possible to provide a battery module, which includes a sensing assembly with convenient and easy expandability, and a battery pack and an energy storage system including the battery module.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery module according to an embodiment of the present disclosure.
FIG. 2 is an exploded perspective view showing the battery module of FIG. 1.
FIG. 3 is an exploded perspective view showing a sensing assembly of the battery module of FIG. 2.
FIG. 4 is an exploded perspective view showing sensing housing parts of the sensing assembly of FIG. 3.
FIG. 5 is a diagram for illustrating an assembled form of the sensing housing parts of FIG. 4.
FIG. 6 is a diagram for illustrating a battery pack according to an embodiment of the present disclosure.

### BEST MODE

The present disclosure will become more apparent by describing in detail the embodiments of the present disclosure with reference to the accompanying drawings. It should be understood that the embodiments disclosed herein are illustrative only for better understanding of the present disclosure, and that the present disclosure may be modified in various ways. In addition, for ease understanding of the present disclosure, the accompanying drawings are not drawn to real scale, but the dimensions of some components may be exaggerated.

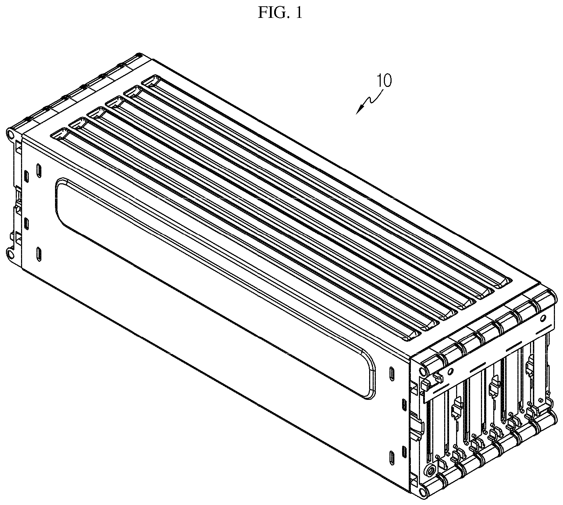

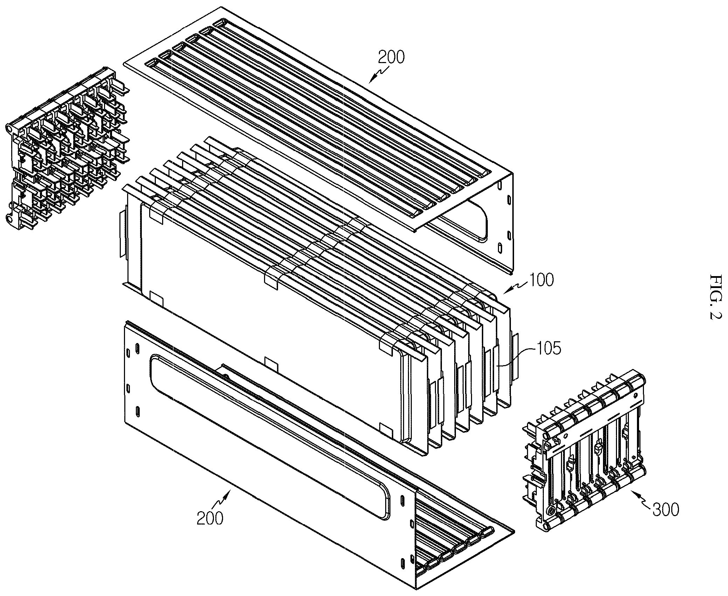

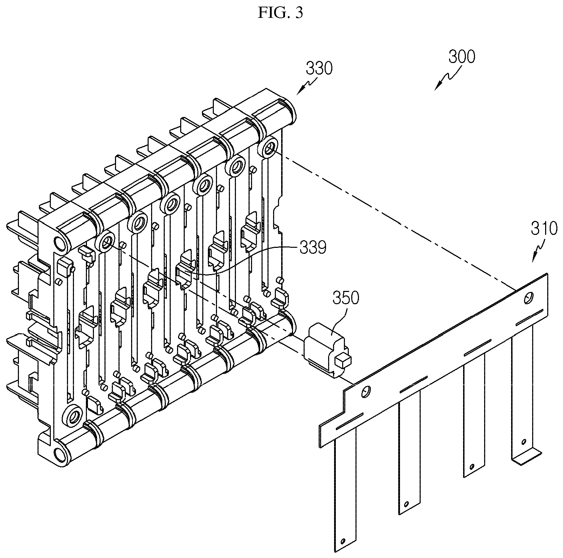

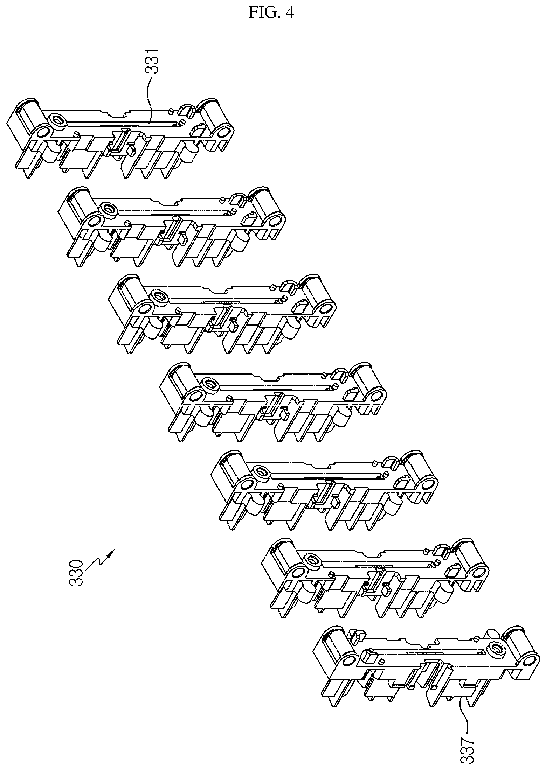

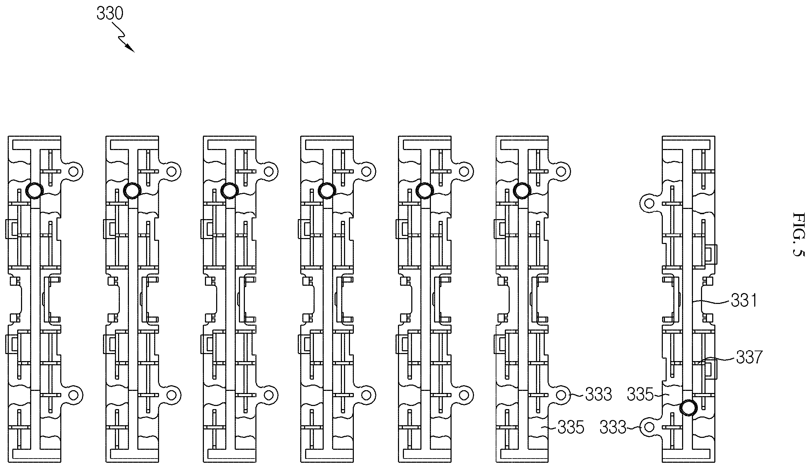

FIG. 1 is a diagram for illustrating a battery module according to an embodiment of the present disclosure, FIG. 2 is an exploded perspective view showing the battery module of FIG. 1, FIG. 3 is an exploded perspective view showing a sensing assembly of the battery module of FIG. 2, FIG. 4 is an exploded perspective view showing sensing housing parts of the sensing assembly of FIG. 3, and FIG. 5 is a diagram for illustrating an assembled form of the sensing housing parts of FIG. 4.

Referring to FIGS. 1 to 5, a battery module 10 may include a battery cell 100, a module case 200 and a sensing assembly 300.

The battery cell 100 may be a secondary battery, or a pouch-type secondary battery. The battery cell 100 may be provided in plural, and the plurality of battery cells 100 may be stacked to be electrically connected to each other.

Each of the plurality of battery cells 100 may include an electrode assembly, a battery case for accommodating the electrode assembly, and a pair of electrode leads 105 protruding out of the battery case and connected to the electrode assembly.

The module case 200 may accommodate the plurality of battery cells 100. The module case 200 may include first and second cases that are coupled to each other to cover the plurality of battery cells 100.

The sensing assembly 300 is for sensing the voltage of the plurality of battery cells 100 and may be mounted to at least one side of the plurality of battery cells 100, or respectively to both sides of the plurality of battery cells 100 in this embodiment.

The sensing assembly 300 electrically connects the electrode leads 105 of the plurality of battery cells 100 and may include a sensing bus bar 310, a sensing housing part 330 and a temperature sensor 350.

The sensing bus bar 310 may be coupled to the electrode leads 105 by welding or the like so as to be electrically connected to the electrode leads 105 of the plurality of battery cells 100.

The sensing housing part 330 functions as a housing of the sensing assembly 300 and may allow various components of the sensing assembly 300 including the sensing bus bar 310 to be placed thereon. The sensing housing part 330 may be provided in plural, and the plurality of sensing housing parts 330 may cover both sides of the battery cells 100. For example, the sensing bus bar 310 may be mounted to a front surface of the plurality of sensing housing parts 330.

The plurality of sensing housing parts 330 may allow the electrode leads 105 of the battery cells 100 to pass toward the sensing bus bar 310, and may cover both sides of the battery cells 100.

The plurality of sensing housing parts 330 may be provided so as to be detachably assembled with each other. In detail, the plurality of sensing housing parts 330 may be assembled by being fitted into each other in a block-to-block coupling pattern.

The plurality of sensing housing parts 330 are provided in a number corresponding to the number of the battery cells 100. Specifically, since the plurality of sensing housing parts 330 may cover both sides of the battery cells 100, two sensing housing parts may be provided for one battery cell 100. Accordingly, the number of the sensing housing parts 330 may be double of the number of the battery cells 100.

Each of the plurality of sensing housing parts 330 may include a lead slot 331, a convex protrusion 333, a concave groove 335, an anti-movement rib 337 and a sensor mounting groove 339.

The lead slot 331 is provided at the center of the sensing housing part 330 and allows the electrode lead 105 of the battery cell 100 to pass to the front of the sensing housing part 330. The electrode leads 105 may be electrically coupled to the sensing bus bar 310 after passing through the lead slot 331.

The convex protrusion 333 and the concave groove 335 are for block-to-block coupling between the plurality of sensing housing parts 330 and may be provided at mutually corresponding positions in an assembling direction of the plurality of sensing housing parts 330.

The convex protrusion 333 and the concave groove 335 may have at least one of a circular shape, a rectangular shape, a trapezoidal shape and an oval shape. However, without being limited thereto, the convex protrusion 333 and the concave groove 335 may also have other shapes to enable the block-to-block coupling.

The anti-movement rib 337 is for preventing the plurality of battery cells 100 from moving in the protruding direction of the electrode leads 105 of the plurality of battery cells 100 and may be formed at a rear surface of the sensing housing part 330.

The anti-movement ribs 337 may be disposed to face each other with the lead slot 331 being interposed therebetween, and may support the battery cell 100 disposed at the rear of the lead slot 331.

The sensor mounting groove 339 is for mounting the temperature sensor 350, explained later, and may be formed as the sensing housing parts 330 facing each other are assembled.

The temperature sensor 350 is for measuring the temperature of the plurality of battery cells 100 and may be inserted into and mounted to the sensor mounting groove 339.

As described above, in this embodiment, the housing structure of the sensing assembly 300 covering the battery cells 100 may be realized by using the plurality of sensing housing parts 330 that are configured to be detachably assembled with each other.

Accordingly, in this embodiment, even though the number of the battery cells 100 of the battery module 10 is changed depending on the required capacity or total size, the housing of the sensing assembly 300 may be realized just by adjusting the number of the sensing housing parts 330 assembled with each other to correspond to the number of the battery cells 100, without designing a new housing structure.

Thus, in this embodiment, it is possible to provide the sensing assembly 300 with convenient and easy expandability by using the sensing housing parts 330 assembled with each other, without a new housing structure.

Therefore, the battery module 10 according to this embodiment may significantly increase the efficiency of the assembling process of the sensing assembly 300.

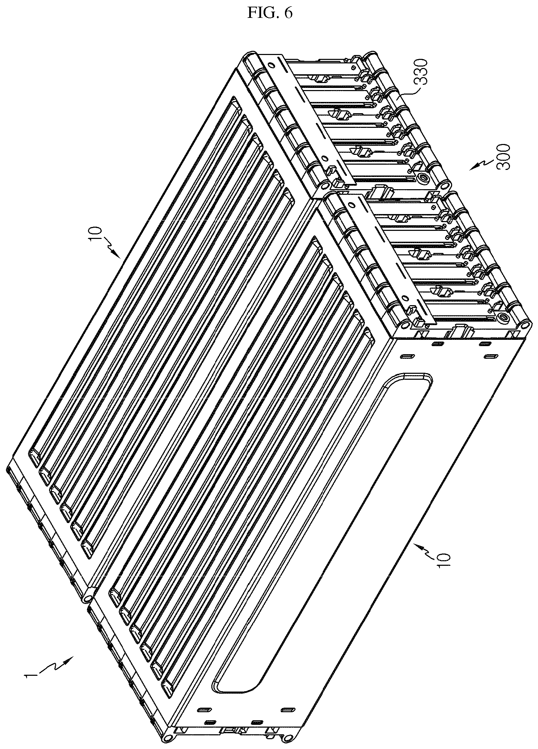

FIG. 6 is a diagram for illustrating a battery pack according to an embodiment of the present disclosure.

Referring to FIG. 6, a battery pack 1 may be provided as an assembly of the plurality of battery modules 10. Though not shown, the battery pack 1 may further include a pack case for packaging the plurality of battery modules 10.

The battery pack 1 may be provided as an energy source of an energy storage system that is used for vehicles such as an electric vehicle or a hybrid vehicle, and also for household or industrial purposes.

When a plurality of battery modules 10 are provided to configure the battery pack 1 as described above, in this embodiment, the sensing housing parts 330 detachably assembled with each other are provided in a number corresponding to the number of the battery cells of the battery modules 10, to configure the sensing assembly 300.

As described above, if the sensing assembly 300 of this embodiment is used, when the capacity of the battery cells is expanded to, for example, configure the battery pack 1, it is possible to implement a sensing assembly 300 suitable for the expanded capacity by increasing the number of the sensing housing parts 330 detachably assembled with each other, without redesigning a separate sensing assembly 300 therefor.

In other words, in this embodiment, by using the sensing housing parts 330, even when the battery pack 1 is configured to have a larger capacity and total size than the battery module 10, it is not required to design a sensing assembly corresponding to the total size of the battery pack 1, different from the conventional technique.

Accordingly, in this embodiment, when the battery module 10 or the battery pack 1 is configured using the battery cells 100, it is possible to implement the sensing cell 300 with convenient and easy expandability.

According to various embodiments as described above, it is possible to provide a battery module 10, which includes the sensing assembly 300 with convenient and easy expandability, and a battery pack 1 and an energy storage system including the battery module.

While the embodiments of the present disclosure have been shown and described, it should be understood that the present disclosure is not limited to the specific embodiments described, and that various changes and modifications can be made within the scope of the present disclosure, defined by the claims, by those skilled in the art, and these modifications should not be understood individually from the technical ideas and views of the present disclosure.

## Claims

1. A battery module (10), comprising:
a plurality of battery cells (100) stacked on one another and having electrode leads (105) protruding therefrom; and
at least one sensing assembly (300) mounted to at least one side of the plurality of battery cells and configured to electrically connect the electrode leads,
wherein the at least one sensing assembly includes:
a sensing bus bar (310) electrically connected to the electrode leads; and
a plurality of sensing housing parts (330) configured so that the sensing bus bar is mounted to a front surface thereof, the plurality of sensing housing parts allowing the electrode leads to pass therethrough toward the sensing bus bar, the plurality of sensing housing parts being detachably assembled with each other;
wherein the plurality of sensing housing parts are provided in a number corresponding to the number of the battery cells,
wherein the plurality of sensing housing parts are assembled by being fitted into each other in a block-to-block coupling pattern, and
wherein the plurality of sensing housing parts respective have a convex protrusion (333) and a concave groove (335) corresponding to each other.

2. The battery module according to claim 1,
wherein the convex protrusion and the concave groove have at least one of a circular shape, a rectangular shape, a trapezoidal shape and an oval shape.

3. The battery module according to claim 1,
wherein at least one anti-movement rib (337) is formed at a rear surface of the plurality of sensing housing parts to prevent the battery cells from moving.

4. The battery module according to claim 1,
wherein the sensing assembly includes a temperature sensor (350) provided between the plurality of sensing housing parts and the sensing bus bar.

5. The battery module according to claim 4,
wherein when being assembled with each other, the plurality of sensing housing parts form a sensor mounting groove (339) between them and in which the temperature sensor is mounted.

6. A battery pack (1), comprising:
at least one battery module (10) as defined in claim 1; and
a pack case configured to package the at least one battery module.

7. An energy storage system, comprising:
at least one battery pack as defined in claim 6.

## Patentansprüche

1. Batteriemodul (10), umfassend:
eine Vielzahl von Batteriezellen (100), die aufeinandergestapelt sind und daraus hervorstehende Elektrodenleitungen (105) aufweisen; und
mindestens eine Erfassungsanordnung (300), die an mindestens einer Seite der Vielzahl von Batteriezellen montiert und konfiguriert ist, um die Elektrodenleitungen elektrisch zu verbinden,
wobei die mindestens eine Erfassungsanordnung beinhaltet:
eine Erfassungssammelschiene (310), die elektrisch mit den Elektrodenleitungen verbunden ist; und
eine Vielzahl von Erfassungsgehäuseteilen (330), die konfiguriert sind, sodass die Erfassungssammelschiene an einer vorderen Oberfläche davon montiert ist, wobei die Vielzahl von Erfassungsgehäuseteilen es den Elektrodenleitungen ermöglicht, durch sie hindurch zur Erfassungssammelschiene zu verlaufen, wobei die Vielzahl von Erfassungsgehäuseteilen lösbar miteinander zusammengesetzt sind;
wobei die Vielzahl von Erfassungsgehäuseteilen in einer Anzahl bereitgestellt ist, die der Anzahl der Batteriezellen entspricht,
wobei die Vielzahl von Erfassungsgehäuseteilen durch Ineinanderpassen in einem Block-an-Block-Kopplungsmuster zusammengebaut sind, und
wobei die Vielzahl von Erfassungsgehäuseteilen jeweils einen konvexen Vorsprung (333) und eine konkave Nut (335) aufweisen, die einander entsprechen.

2. Batteriemodul nach Anspruch 1, wobei der konvexe Vorsprung und die konkave Nut mindestens eine von einer kreisförmigen Form, einer rechteckigen Form, einer trapezförmigen Form und einer ovalen Form aufweisen.

3. Batteriemodul nach Anspruch 1,
wobei mindestens eine Anti-Bewegungs-Rippe (337) an einer hinteren Oberfläche der Vielzahl von Erfassungsgehäuseteilen gebildet ist, um zu verhindern, dass sich die Batteriezellen bewegen.

4. Batteriemodul nach Anspruch 1,
wobei die Erfassungsanordnung einen Temperatursensor (350) beinhaltet, der zwischen der Vielzahl von Erfassungsgehäuseteilen und der Erfassungssammelschiene bereitgestellt ist.

5. Batteriemodul nach Anspruch 4,
wobei die Vielzahl von Erfassungsgehäuseteilen, wenn sie miteinander zusammengesetzt sind, eine Sensormontagenut (339) zwischen sich bilden und in der der Temperatursensor montiert ist.

6. Batteriepack (1), umfassend:
mindestens ein Batteriemodul (10) wie in Anspruch 1 definiert; und
ein Packgehäuse, das konfiguriert ist, um das mindestens eine Batteriemodul zu packen.

7. Energiespeichersystem, umfassend:
mindestens ein Batteriepack wie in Anspruch 6 definiert.

## Revendications

1. Module de batterie (10), comprenant : une pluralité d'éléments de batterie (100) empilés les uns sur les autres et ayant des sorties d'électrode (105) faisant saillie de ceux-ci ; et au moins un ensemble de détection (300) monté sur au moins un côté de la pluralité d'éléments de batterie et configuré pour connecter électriquement les sorties d'électrode, dans lequel le au moins un ensemble de détection inclut : une barre omnibus de détection (310) connectée électriquement aux sorties d'électrode ; et une pluralité de parties de boîtier de détection (330) configurées de sorte que la barre omnibus de détection soit montée sur une surface avant de celles-ci, la pluralité de parties de boîtier de détection permettant aux sorties d'électrode de passer à travers celles-ci vers la barre omnibus de détection, la pluralité de parties de boîtier de détection étant assemblées de manière détachable les unes avec les autres ; dans lequel la pluralité de parties de boîtier de détection sont prévues en un nombre correspondant au nombre des éléments de batterie, dans lequel la pluralité de parties de boîtier de détection sont assemblées en étant emboîtées les unes dans les autres selon un motif de couplage bloc à bloc, et dans lequel la pluralité de parties de boîtier de détection ont respectivement une saillie convexe (333) et une rainure concave (335) qui se correspondent.

2. Module de batterie selon la revendication 1, dans lequel la saillie convexe et la rainure concave ont au moins une forme parmi une forme circulaire, une forme rectangulaire, une forme trapézoïdale et une forme ovale.

3. Module de batterie selon la revendication 1, dans lequel au moins une nervure anti-déplacement (337) est formée au niveau d'une surface arrière de la pluralité de parties de boîtier de détection pour empêcher les éléments de batterie de se déplacer.

4. Module de batterie selon la revendication 1, dans lequel l'ensemble de détection inclut un capteur de température (350) prévu entre la pluralité de parties de boîtier de détection et la barre omnibus de détection.

5. Module de batterie selon la revendication 4, dans lequel, lorsqu'elles sont assemblées les unes avec les autres, la pluralité de parties de boîtier de détection forment une rainure de montage de capteur (339) entre elles et dans laquelle le capteur de température est monté.

6. Bloc-batterie (1), comprenant : au moins un module de batterie (10) tel que défini dans la revendication 1 ; et un boîtier de bloc configuré pour recevoir le au moins un module de batterie.

7. Système de stockage d'énergie, comprenant : au moins un bloc-batterie tel que défini dans la revendication 6.
